# EUROPÄISCHE PATENTSCHRIFT

(11) **EP 2 936 747 B1**
(45) Veröffentlichungstag und Bekanntmachung des Hinweises auf die Patenterteilung: **22.05.2019**
(21) Anmeldenummer: 13814919.0
(22) Anmeldetag: 19.12.2013
(51) Int. Cl.: H04L 12/40, H04L 29/06, G06F 11/07

(54) **DATENÜBERTRAGUNG UNTER NUTZUNG EINES PROTOKOLLAUSNAHMEZUSTANDS**
DATA TRANSMISSION USING A PROTOCOL EXCEPTION STATE
TRANSMISSION DE DONNÉES EN UTILISANT UN ÉTAT D'EXCEPTION DE PROTOCOLE

(30) Priorität: 20.12.2012 DE 102012224024
(43) Veröffentlichungstag der Anmeldung: 28.10.2015
(73) Patentinhaber: Robert Bosch GmbH, 70442 Stuttgart (DE)
(72) Erfinder: HARTWICH, Florian, 72762 Reutlingen (DE)
(86) Internationale Anmeldenummer: PCT/EP2013/077515
(87) Internationale Veröffentlichungsnummer: WO 2014/096272

(56) Entgegenhaltungen:
- WO-A1-2012/136547
- "Road vehicles ? Controller area network (CAN) ? Part 1: Data link layer and physical signalling ; ISO+11898-1-2003", IEEE DRAFT; ISO+11898-1-2003, IEEE-SA, PISCATAWAY, NJ USA, Bd. msc.upamd, 18. November 2010 (2010-11-18), Seiten 1-52, XP017637056, [gefunden am 2010-11-18]
- Robert Bosch Gmbh: "CAN with Flexible Data-Rate Specification Version 1.0", , 17. April 2012 (2012-04-17), XP055047460, Gerlingen, Germany Gefunden im Internet: URL:http://can-newsletter.org/assets/files /ttmedia/raw/e5740b7b5781b8960f55efcc2b93e df8.pdf [gefunden am 2012-12-11]
- DEFENSE ADVANCED RESEARCH PROJECTS AGENCY INFORMATION SCIENCES INSTITUTE UNIVERSITY OF SOUTHERN CALIFORNIA 4676 ADMIRALTY WAY MARI: "INTERNET PROTOCOL DARPA INTERNET PROGRAM PROTOCOL SPECIFICATION ; rfc791.txt", 19810901, 1. September 1981 (1981-09-01), XP015006773, ISSN: 0000-0003

## Beschreibung

### Stand der Technik

Die vorliegende Erfindung geht aus von einem Verfahren zum Austausch von Daten zwischen Teilnehmern, die mittels eines Bussystems miteinander verbunden sind, wobei die Nachrichten, die die Daten enthalten, gemäß einem ersten Kommunikationsprotokoll ausgetauscht werden, wobei die Nachrichten aus einer Sequenz von Bits bestehen und wenigstens ein Steuerbit mit einer vorgegebenen Position innerhalb der Nachricht, die gemäß dem ersten Kommunikationsprotokoll ausgetauscht wird, einen vorgegebenen Wert aufweisen muss, wobei für jede Nachricht ein Teilnehmer die Rolle des Senders innehat und wenigstens ein anderer Teilnehmer als Empfänger die Nachricht empfängt und eine Fehlerüberwachung für die Nachricht durchführt.

Ein derartiges Verfahren findet sich beispielsweise in Kommunikationscontrollern des Controller Area Network (CAN). Es wird beispielsweise in der BOSCH CAN-Spezifikation 2.0, die von der Robert Bosch GmbH Website http://www.semiconductors.bosch.de heruntergeladen werden kann, beschrieben. Das Bussystem ist hierbei üblicherweise ein Leitungspaar, wie etwa ein verdrilltes Kupferkabel. Das CAN-Protokoll ist beispielsweise in der Automobilindustrie, in der Industrieautomatisierung, oder auch in der Gebäudevernetzung weit verbreitet. Die im CAN-Protokoll zu übertragenden Nachrichten weisen einen Kopfteil, ein Datenfeld und einen Schlussteil auf, wobei die zu übertragenen Daten im Datenfeld enthalten sind. Der Kopfteil der Nachricht enthält ein Start-Of-Frame-Bit, ein Arbitration Field, sowie ein Control Field. Das Arbitration Field umfasst den Identifier, der die Priorität der Nachricht bestimmt. CAN unterstützt Identifier Längen von 11-Bit ("Standard Format" oder "Base Format") und 29-Bit ("Extended Format"). Das Control Field umfasst einen Data Length Code, der die Länge des Datenfeldes vorgibt. Der Schlussteil der Nachricht weist ein CRC Field, ein Acknowledge Field und ein End-Of-Frame Field auf. Dieses CAN-Protokoll wird im Folgenden als "Norm CAN" bezeichnet. Es werden über Norm CAN Bitraten bis zu 1 Mbit/s erreicht.

Die Rollen von Sender und Empfänger für die zu übertragenden Nachrichten werden unter den Teilnehmern durch ein Arbitrierungsverfahren anhand Informationen aus dem Kopfteil der Nachrichten vergeben. Arbitrierungsverfahren bedeutet in diesem Zusammenhang, dass anhand einer in der Nachricht enthaltenen Kennung ausgehandelt wird, welcher Teilnehmer Sendezugriff auf den Bus erhält, wenn mehrere Teilnehmer gleichzeitig versuchen, eine Nachricht zu senden, wobei bei eindeutig vergebenen Kennungen genau einem Teilnehmer der Sendezugriff durch das Arbitrierungsverfahren zuerkannt wird. Das für unsere Erfindung vorausgesetzte wenigstens eine Steuerbit ist bei CAN im Kopfteil enthalten und ist beispielsweise ein reserviertes Bit im Arbitration Field oder im Control Field, welches mit einem vorgegebenen Wert, beispielsweise stets dominant übertragen werden muss.

Viele andere Kommunikationssysteme kennen ähnliche reservierte Bits, die stets mit einem festen Wert übertragen werden. Im Folgenden wird die Erfindungsidee ausgehend von CAN dargestellt. Die Erfindung ist dadurch jedoch nicht auf CAN Bussysteme beschränkt, sondern kann ausgehend von allen Bussystemen ausgeführt werden, die die Merkmale des Oberbegriffes des beanspruchten Verfahrens erfüllen.

Die Einführung von immer stärker vernetzten Anwendungen, beispielsweise von Assistenzsystemen in Fahrzeugen, oder von vernetzten Steuersystemen in Industrieanlagen, führt zu der allgemeinen Anforderung, dass die Bandbreite für die serielle Kommunikation erhöht werden muss.

Zwei Faktoren begrenzen die effektive Datenrate in Norm CAN-Netzwerken, nämlich einerseits die Bitdauer, also die zeitliche Länge eines Bits, die durch die Funktion des CAN Busarbitrierungsverfahren nach unten begrenzt wird, und andererseits die Beziehung zwischen der Anzahl von Datenbits und Steuerbits, also nicht Nutzdaten enthaltenden Bits, in einer CAN-Nachricht.

Aus WO 2012/136547 A1 ist ein weiteres Protokoll bekannt, das "CAN with Flexible Data-Rate" oder CAN FD genannt wird. Dieses benutzt das vom CAN bekannte Busarbitrierungsverfahren, erhöht aber die Bitrate durch Umschalten auf eine kürzere Bitdauer nach dem Ende der Arbitrierung bis zum Bit CRC Delimiter. Die effektive Datenrate wird außerdem durch Zulassen längerer Datenfelder erhöht. Auch bei CAN FD handelt es sich um ein Verfahren zum Austausch von Daten zwischen Teilnehmern, die mittels eines Bussystems miteinander verbunden sind, wobei die Nachrichten, die die Daten enthalten, gemäß einem ersten Kommunikationsprotokoll ausgetauscht werden, wobei die Nachrichten aus einer Sequenz von Bits bestehen und innerhalb jeder Nachricht, die Daten enthält, wenigstens ein Steuerbit mit einer vorgegebenen Position innerhalb der Sequenz von Bits einen vorgegebenen Wert aufweisen muss.

CAN FD kann zur allgemeinen Kommunikation, aber auch in bestimmten Betriebsarten, beispielsweise für Software-Download oder End-of-Line-Programmierung oder für Wartungsarbeiten genutzt werden.

CAN FD erfordert zwei Sätze von Bittakt-Konfigurationsregistern, welche eine Bitdauer für die Arbitrierungsphase und eine weitere Bitdauer für die Datenphase definieren. Die Bitdauer zur Arbitrierungsphase hat die gleichen Einschränkungen wie in Norm CAN-Netzwerken, die Bitdauer für die Datenphase kann im Hinblick auf die Leistungsfähigkeit der gewählten Transceiver und die Anforderungen des CAN FD Netzwerks kürzer gewählt werden.

Den Transceivern oder Busanschlusseinheiten kommt im Netzwerk die Aufgabe zu, die logischen Signale des Kommunikationscontrollers entsprechend der vorgesehenen physikalischen Übertragungsschicht zu zugehörigen physikalischen Signalen auf dem jeweiligen Übertragungsmedium umzusetzen. Häufig, z.B. auch für CAN, erfolgt dabei die Darstellung der logischen Signale, indem als physikalische Signale geeignete Spannungsdifferenzen generiert bzw. übertragen werden. Dies wird im Folgenden zur Illustration am Beispiel von CAN ausgeführt.

Für CAN erfolgt die Darstellung der logischen Signale "0" und "1" üblicherweise als Spannungsdifferenz zwischen den beiden in der Regel metallischen (z.B. Kupfer) Leitungen des Bussystems. Der Transceiver stellt hierbei üblicherweise für die Darstellung einer "0" einen vorgegebenen ersten Differenzspannungspegel von beispielsweise 2 Volt aktiv ein, indem er beispielsweise mittels einer geeigneten Stromquelle einen Strom fließen lässt, so dass die gewünschte Spannungsdifferenz sich einstellt. Dieser getriebene erste Differenzspannungspegel kann nicht durch einen anderen Busteilnehmer überschrieben werden. Der Pegel und der entsprechende Buszustand werden daher als "dominant" bezeichnet.

Zur Darstellung einer "logischen "1" wird der Strom nicht weitergetrieben. Über einen oder mehrere Abschlusswiderstände, welche beispielsweise an den Enden der Busleitung zwischen den beiden Leitungen des Bussystems vorgesehen sind, fließt ein Strom, so dass sich ein zweiter Differenzspannungspegel einstellt, welcher der logischen "1" entspricht. Dieser zweite Differenzspannungspegel kann Null sein, kann aber auch durch geeignete Spannungsquellen auf einen von Null verschiedenen Wert eingestellt werden. Dieser sich einstellende zweite Differenzspannungspegel kann durch einen anderen Busteilnehmer mit einem dominanten Pegel überschrieben werden. Der zweite Pegel und der entsprechende Buszustand werden daher als "rezessiv" bezeichnet.

Der Transceiver ermittelt zudem laufend die Spannungsdifferenz zwischen den beiden Leitungen, um beispielsweise durch einen Vergleich mit Schwellwerten festzustellen, ob gerade ein dominanter oder rezessiver Buspegel vorliegt.

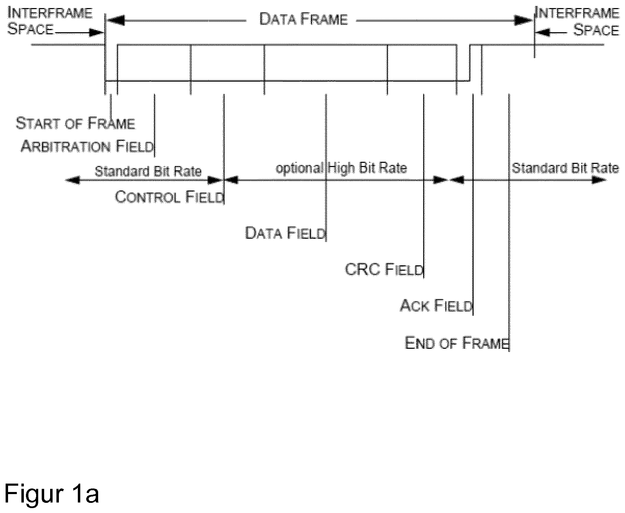

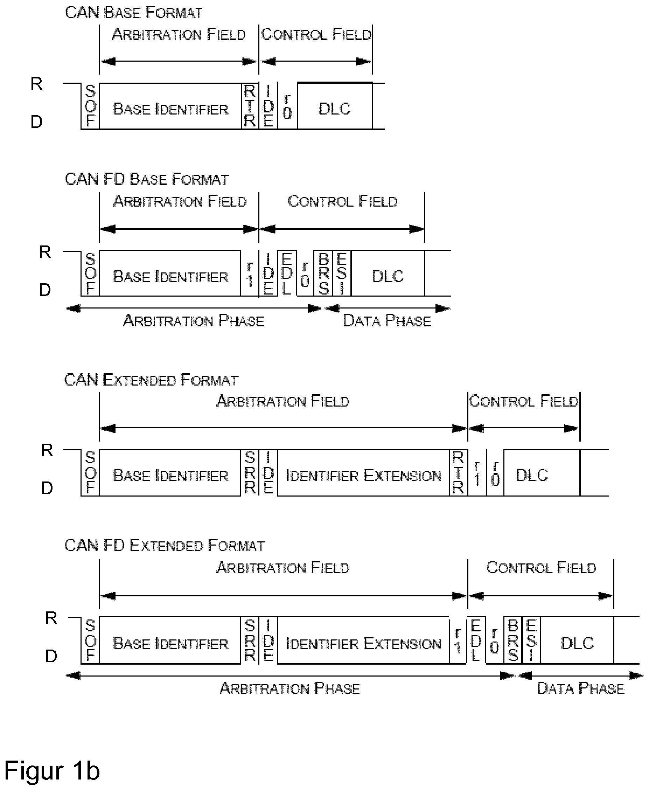

Eine CAN FD Nachricht besteht aus den gleichen Elementen wie eine Norm CAN-Nachricht, die sich jedoch im Detail unterscheiden. So können in einer CAN FD-Nachricht das Datenfeld und das CRC-Feld länger sein. Beispiele für Norm CAN- und CAN FD-Nachrichten sind in Abbildung 1 dargestellt.

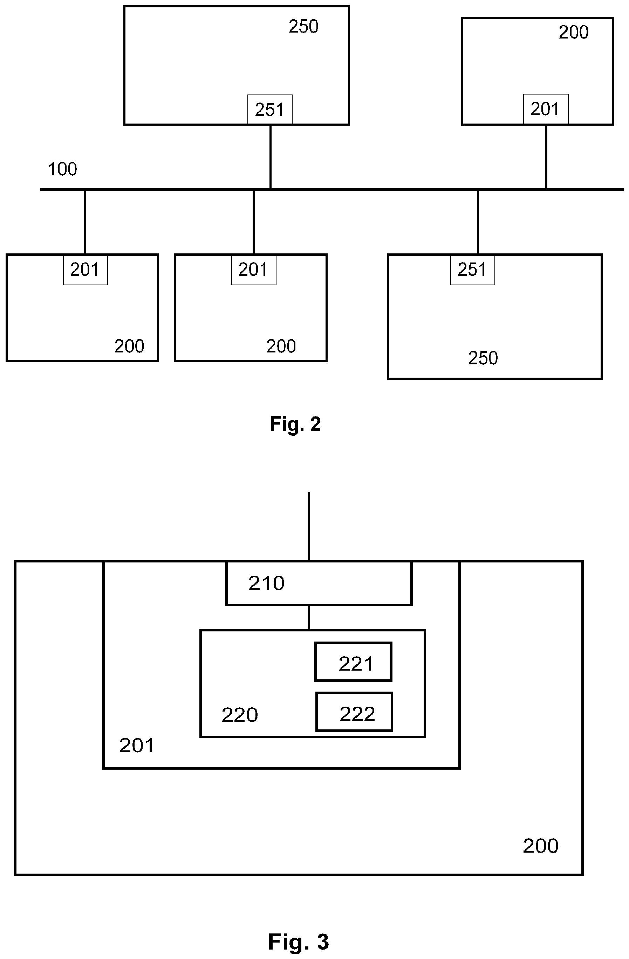

CAN FD unterstützt beide Identifier Längen des CAN-Protokolls, das 11-Bit lange "Standard Format", das auch "Base Format" genannt wird, und das 29-Bit lange "Extended Format". CAN-FD Nachrichten haben die gleiche Struktur wie Norm CAN-Nachrichten. Die Unterscheidung zwischen Norm CAN-Nachrichten und CAN-FD Nachrichten erfolgt durch ein reserviertes Bit, welches im Norm CAN stets dominant übertragen wird, den Namen "r0" oder "r1" trägt und sich im Control Field vor dem Data Length Code befindet. In einer CAN FD Nachricht wird dieses Bit rezessiv übertragen und heißt EDL. Es folgen in den CAN FD-Nachrichten im Vergleich zu Norm CAN-Nachrichten zusätzliche Control Field Bits, z. B. das Bit BRS, welches die Position angibt, an der, sofern das BRS Bit einen entsprechenden Wert aufweist, die Bitdauer in einer CAN FD-Nachricht auf einen kürzeren Wert umgeschaltet wird. Dies ist in Figur 2 durch Pfeile dargestellt, die die Nachrichten aufteilen in einen Abschnitt mit der Bezeichnung "CAN FD Daten-Phase", in denen die hohe Bitrate bzw. die kurze Bitdauer verwendet wird, und in zwei Abschnitte mit dem Namen "CAN FD Arbitration-Phase", wo die niedrigere Bitrate bzw. die längere Bitdauer verwendet wird.

Die Anzahl der Bytes im Datenfeld wird durch den Data Length Code angezeigt. Dieser Code ist 4 Bit breit und wird im Control-Feld übertragen. Die Kodierung ist bei CAN FD anders als im Norm CAN. Die ersten neun Codes (0x0000 bis 0x1000) sind die gleichen, aber die folgenden Codes (0x1001 bis 0x1111) korrespondieren zu größeren Datenfeldern der CAN FD-Nachrichten, beispielsweise 12, 16, 20, 24, 32, 48 und 64 Bit.

Norm CAN-Transceiver können für CAN FD verwendet werden, spezielle Transceiver sind optional und können gegebenenfalls zu einer weiteren Steigerung der Bitrate in der Datenphase beitragen.

Das CAN FD-Protokoll ist in einer Protokoll-Spezifikation mit dem Titel "CAN with Flexible Data-Rate Specification", im folgenden bezeichnet als die CAN FD Spezifikation, beschrieben, die auf der Robert Bosch GmbH Website http://www.semiconductors.bosch.de heruntergeladen werden kann.

Solange unmodifizierte Norm CAN-Controller verwendet werden, kann ein gemischtes Netzwerk von Norm CAN-Teilnehmern und CAN FD-Teilnehmern nur im Norm CAN-Format kommunizieren. Das heißt, alle Teilnehmer im Netzwerk müssen einen CAN-FD-Protokoll-Controller aufweisen, um CAN FD-Kommunikation durchzuführen. Alle CAN FD-Protokoll-Controller sind jedoch in der Lage, sich an Norm CAN-Kommunikation zu beteiligen.

Eine Ursache für dieses Zurückfallen auf die langsamere Kommunikation in gemischten Netzwerken ist die Überwachung der Kommunikation durch die Kommunikations-Teilnehmer, die für die hohe Übertragungssicherheit beispielsweise in CAN-Bussystemen mitverantwortlich ist. Da die unmodifizierten Norm CAN-Controller die schnelleren Datenbits der CAN FD-Nachrichten nicht korrekt empfangen können, würden sie diese Nachrichten durch Fehlernachrichten (so genannte Error-Frames) zerstören. In ähnlicher Weise würden CAN FD-Controller Nachrichten durch Error-Frames zerstören, die nach erfolgter Arbitrierung beispielsweise unter Nutzung einer nochmals gegenüber der CAN FD-Spezifikation verkürzten Bitdauer oder unter Nutzung einer anderen Bitcodierung oder eines abweichenden Protokolls zu übertragen versuchen würden. Die Übertragungsrate kann also im Allgemeinen durch einen der langsameren Teilnehmer im Netzwerk, beziehungsweise durch dessen Überwachungsmechanismus, begrenzt werden.

Insbesondere dann, wenn eine Datenübertragung zwischen zwei bestimmten Teilnehmern erfolgen soll, welche für ein abweichendes, zum Beispiel schnelleres Kommunikationsprotokoll eingerichtet sind, ist diese Begrenzung nicht immer notwendig und kann nachteilig sein, insbesondere, wenn auf die Überwachungsmechanismen, welche zur Zerstörung der abweichenden oder schnelleren Nachrichten führen würden, bei diesem abweichenden Kommunikationsprotokoll verzichtet werden kann.

Zumindest in bestimmten Anwendungsfällen können also wesentlich höhere Übertragungsraten erzielt werden, wenn der Überwachungsmechanismus, der die Zerstörung der Nachrichten durch Error-Frames bewirkt, unter bestimmten Voraussetzungen durch geeignete Mechanismen ausgesetzt wird.

### Offenbarung der Erfindung

Die vorliegende Erfindung stellt ein Verfahren und eine entsprechende Empfängervorrichtung bereit, das diesen Nachteil behebt, indem ein Umschalten auf eine schnellere oder anderweitig modifizierte Kommunikation unter Nutzung der Leitungen eines vorhandenen Bussystems ermöglicht und durchgeführt wird, ohne dass die schneller übertragenen Nachrichten durch andere Busteilnehmer zerstört werden.

### Vorteile der Erfindung

Gegenstand der vorliegenden Erfindung ist ein Verfahren zum Austausch von Daten zwischen Teilnehmern, die mittels eines Bussystems miteinander verbunden sind, wobei Nachrichten, die Daten enthalten, gemäß einem ersten Kommunikationsprotokoll ausgetauscht werden, wobei die Nachrichten aus einer Sequenz von Bits bestehen, wobei wenigstens ein Steuerbit mit einer vorgegebenen Position innerhalb der Nachricht, die gemäß dem ersten Kommunikationsprotokoll ausgetauscht wird, einen vorgegebenen Wert aufweisen muss, wobei für jede Nachricht ein Teilnehmer die Rolle des Senders innehat und wenigstens ein anderer Teilnehmer als Empfänger die Nachricht empfängt und eine Fehlerüberwachung für die Nachricht durchführt. Das Verfahren ist dadurch gekennzeichnet, dass der Sender durch Senden des Steuerbits mit einem von dem vorgegebenen Wert abweichenden Wert wenigstens einen ersten Empfänger in einen Protokollausnahmezustand überführt, so dass dieser die Fehlerüberwachung aussetzt, wobei der Sender nach dem Senden des Steuerbits mit einem von dem vorgegebenen Wert abweichenden Wert beginnt, weitere Daten gemäß einem zweiten Kommunikationsprotokoll an wenigstens einen zweiten Empfänger zu übertragen. Das Steuerbit mit abweichendem Wert signalisiert demnach, dass die Kommunikation auf der Busleitung auf ein abweichendes, zum Beispiel schnelleres Kommunikationsprotokoll umgestellt werden soll, für welches die Fehlerüberwachung ausgesetzt werden kann. So kann durch das erfindungsgemäße Verhalten der Vorteil erzielt werden, dass die Fehlerüberwachung des wenigstens einen Empfängers nicht die Verwendung für eine schnellere Datenübertragung stört oder verhindert.

In einer besonders vorteilhaften Ausführungsform werden dieWerte von Bits auf dem Bussystem durch physikalische Signale dargestellt, wobei für die Übertragung nach dem zweiten Kommunikationsprotokoll physikalische Signale verwendet werden, welche sich von den physikalischen Signalen für die Übertragung nach dem ersten Kommunikationsprotokolls unterscheiden. Dies vereinfacht es, empfängerseitig die Kommunikation gemäß dem ersten Protokoll von der Kommunikations gemäß dem zweiten Protokoll zu trennen und eine gegenseitige Störung der beiden Protokolle zu minimieren oder vermeiden.

Vorteilhafterweise verbleibt der wenigstens eine erste Empfänger im Protokollausnahmezustand, bis eine Wiederaufnahmebedingung für die Nutzung des ersten Kommunikationsprotokolls erfüllt ist. Durch geschickte Wahl der Wiederaufnahmebedingung und des zweiten Kommunikationsprotokolls kann ein ungewolltes Auftreten der Wiederaufnahmebedingung verhindert werden, so dass gezielt zwischen dem ersten und zweiten Kommunikationsprotokoll hin- und hergeschaltet werden kann.

Werden für die Übertragung nach dem zweiten Kommunikationsprotokoll physikalische Signale verwendet werden, welche so gewählt sind, dass während der Übertragung nach dem zweiten Kommunikationsprotokoll die Wiederaufnahmebedingung für die Nutzung des ersten Kommunikationsprotokolls nicht erfüllt ist, kann die Übertragung gemäß dem zweiten Protokoll uneingeschränkt erfolgen, ohne dass die Wiederaufnahmebedingung eintritt. Eine besonders vorteilhafte Ausprägung hierfür ist es, wenn für die Übertragung nach dem zweiten Kommunikationsprotokoll physikalische Signale verwendet werden, welche bezüglich des ersten Kommunikationsprotokolls wie ein bestimmtes physikalisches Signal der Übertragung nach dem ersten Kommunikationsprotokoll interpretiert werden, welches das Eintreten der Wiederaufnahmebedingung vermeidet. Dann ist dadurch sichergestellt, dass die Wiederaufnahmebedingung nicht vor Abschluss der Kommunikation gemäß dem zweiten Kommunikationsprotokoll eintritt.

Weiter vorteilhaft kann es sein, wenn der Sender nach dem Senden des wenigstens einen Steuerbits mit einem von dem vorgegebenen Wert abweichenden Wert eine Information überträgt, gemäß welchem Kommunikationsprotokoll er die weiteren Daten übertragen wird, bevor er beginnt, die weiteren Daten gemäß diesem Kommunikationsprotokoll an wenigstens einen zweiten Empfänger zu übertragen. Insbesondere, wenn der Sender und/oder der vorgesehene Empfänger zur Nutzung mehrerer verschiedener Kommunikationsprotokolle zusätzlich zu dem ersten Kommunikationsprotokoll eingerichtet sind, kann es sinnvoll sein, dass vor Beginn der Übertragung mitgeteilt wird, welches dieser Kommunikationsprotokolle für die dann folgende Übertragung verwendet wird, so dass der Empfänger sich beispielsweise darauf einstellen kann, indem er eine geeignete Empfangseinheit aktiviert oder einen Schaltmechanismus ausführt, der die danach gemäß dem zweiten Kommunikationsprotokoll empfangenen Signale der dafür geeigneten Kommunikationseinrichtung zuführt.

Für das Verfahren kann es vorteilhaft sein, dass der wenigstens eine erste Empfänger den Protokollausnahmezustand einnimmt, indem er einen Neustart einer Protokollsteuereinheit oder einer Protokollzustandsmaschine durchführt. Es ist weiter vorteilhaft, wenn als Wiederaufnahmebedingung für die Nutzung des ersten Kommunikationsprotokolls eine vorgegebene oder vorgebbare Anzahl von Bits mit vorgegebenen Werten oder eine vorgegebene oder vorgebbare Dauer ausbleibender Kommunikation auf dem Bus definiert ist. Dies vermindert den Aufwand zur Implementierung des Verfahrens in diesen Empfängern, da der entsprechende Mechanismus, einen Neustart durchzuführen, üblicherweise ohnehin vorgesehen ist. Dabei wird in manchen Bussystemen, wie z.B. CAN, üblicherweise auf das Auftreten einer Anzahl von Bits mit vorgegebenen Werten, insbesondere auf rezessive Bits, gewartet, um sich auf die bestehende Buskommunikation wieder aufzusynchronisieren.

Vorteilhafterweise weisen die gemäß dem ersten Kommunikationsprotokoll zu übertragenden Nachrichten einen Kopfteil, ein Datenfeld und einen Schlussteil auf, wobei anhand einer im Kopfteil der Nachricht enthaltenen Kennung festgelegt wird, welcher Teilnehmer Sendezugriff auf den Bus erhält, wenn mehrere Teilnehmer gleichzeitig versuchen, eine Nachricht zu senden, wobei das wenigstens eine Steuerbit im Kopfteil enthalten ist. Dadurch wird der Zugriff auf den Bus für jede Nachricht nachvollziehbar an einen definierten Teilnehmer vergeben und es treten keine Kollisionen von Nachrichten auf, welche zu Zerstörung beider kollidierenden Nachrichten führen.

Werden gemäß dem zweiten Kommunikationsprotokoll die weiteren Daten nach einem geeigneten Startsignal als beliebige, definierte Folge von Dateneinheiten, wie z.B. als Folge von Bytes oder 16-, 32- oder 64-Bit-Einheiten, oder im UART-Format oder im FlexRay-Format oder in einem Ethernet-MAC-Format übertragen, können die Daten schnell übertragen werden. Außerdem kann die Verwendung dieser bekannten Nachrichtenformate zu einer höheren Absicherungstiefe der verwendeten Hard- und Software führen.

Für die Vorrichtung, welche Mittel enthält, um eines der beanspruchten Verfahren auszuführen, gelten sinngemäß die gleichen Vorteile.

Als Wiederaufnahmebedingung für die Nutzung des ersten Kommunikationsprotokolls wird vorteilhafterweise eine vorgegebene oder vorgebbare Anzahl von Bits mit vorgegebenen Werten definiert, oder eine vorgegebene oder vorgebbare Dauer ausbleibender Kommunikation auf dem Bus festgelegt.
Insbesondere kann der wenigstens eine Empfänger nach dem Neustart das Eintreten der Wiederaufnahmebedingung unter Nutzung einer Flankenerkennung und eines Zählers für das Auftreten von Bits mit einem vorgegebenen Wert überwachen, wobei der Zähler bei Auftreten einer Flanke neu gestartet wird. Dies verringert den Aufwand zur Umsetzung des Verfahrens ausgehend von einer Implementierung, welche das erste Kommunikationsprotokoll beherrscht, weiter, da die Teilnehmer sich üblicherweise auf diese Weise nach einem fehlerbedingten Neustart oder zu Beginn der Datenübertragung auf die Buskommunikation aufsynchronisieren.

Vorteilhafterweise weisen die gemäß dem ersten Kommunikationsprotokoll zu übertragenden Nachrichten einen Kopfteil, ein Datenfeld und einen Schlussteil auf, wobei die zu übertragenen Daten im Datenfeld enthalten sind und das wenigstens eine Steuerbit im Kopfteil enthalten ist. Dadurch kann frühzeitig innerhalb der Nachricht nach Lesen des Steuerbits der Protokollausnahmezustand eingenommen werden und gegebenenfalls der Sender auf ein abweichendes Kommunikationsprotokoll umschalten.

Sofern die Rollen von Sender und Empfänger unter den Teilnehmern durch ein Arbitrierungsverfahren vergeben werden, wobei anhand einer im Kopfteil der Nachricht enthaltenen Kennung festgelegt wird, welcher Teilnehmer Sendezugriff auf den Bus erhält, wenn mehrere Teilnehmer gleichzeitig versuchen, eine Nachricht zu senden, ist in vorteilhafter Weise sichergestellt, dass keine Kollisionen in der Buskommunikation auftreten. Insbesondere kann dies dadurch erreicht werden, dass das Arbitrierungsverfahren gemäß dem CAN-Standard ISO 11898-1 ausgeführt wird und der Kopfteil der Nachricht ein Start-Of-Frame-Bit, ein Arbitration Field, ein Control Field umfasst und der Schlussteil der Nachricht ein CRC Field, ein Acknowledge Field und ein End-Of-Frame Field aufweist.

Eine Vorrichtung, die geeignete Mittel zur Ausführung eines Verfahrens aufweist, wie es Gegenstand von Anspruch 1 oder eines davon abhängigen Unteranspruchs ist, weist die entsprechenden Vorteile auf. Insbesondere kann eine derartige Vorrichtung vorteilhafterweise in gemischten Netzwerken zum Einsatz kommen und dort zur schnellen und reibungslosen Datenübertragung beitragen.

### Zeichnungen

Die Figur 1a stellt die gemeinsame Grundstruktur von Norm CAN- und CAN-FD-Nachrichten dar. Die Abfolge und die Bezeichnungen der Nachrichtenabschnitte (Start-Of-Frame-Bit, Arbitration Field, Control Field, Data Field, CRC Field, ein Ack Field und End-Of-Frame Field) sind angegeben. Vor und nach der Nachricht befindet sich der Bus im Zustand ohne Datenübertragung, was durch den Begriff "Interframe Space" bezeichnet wird. Es werden in der Regel die englischen Bezeichnungen verwendet, wie sie im Standard ISO 11898 festgelegt sind. Die Bitratenumschaltung, die bei CAN FD-Nachrichten erfolgen kann, ist durch Abschnitte mit "Standard Bit Rate" und mit "optional High Bit Rate" eingezeichnet.

Die Figur 1b stellt den Kopfteil, umfassend Start-Of-Frame-Bit, Arbitration Field und Control Field, von Nachrichten gemäß Norm CAN-Protokoll und CAN FD-Protokoll dar, jeweils im Standard- bzw. Base-Format und im Extended Format. In der DATA-Phase kann eine Bitratenumschaltung bei CAN FD-Nachrichten erfolgen.

Figur 2 zeigt ein gemischtes Netzwerk aus ersten Teilnehmern 200 und zweiten Teilnehmern 250. Die Teilnehmer sind über ein Bussystem 100 verbunden, welches beispielsweise als zweiadrige Kupferleitung ausgebildet sein kann. Die Leitungsenden können beispielsweise durch geeignete Abschlusswiderstände abgeschlossen werden, um Reflexionen der Nachrichten zu vermeiden. Es sind auch andere Leitungstopologien, wie z.B. ringförmige, sternförmige, oder baumartige Topologien denkbar. Die ersten und zweiten Teilnehmer sind durch erste und zweite Schnittstellen 201, 251 mit dem Bussystem verbunden. Die Schnittstellen umfassen beispielsweise Busanschlusseinheiten wie z.B. CAN-Transceiver und Kommunikationseinheiten wie z.B. CAN-Controller oder CAN FD-Controller. Die Schnittstellen können auch ganz oder teilweise mit weiteren Bauelementen der Teilnehmer integriert dargestellt sein. Eine übliche Kombination ist beispielsweise die Integration der Kommunikationseinheit in einen ebenfalls vorhandenen Mikroprozessor des Teilnehmers.

Die ersten Teilnehmer zeichnen sich dadurch aus, dass sie erfindungsgemäß den Protokollausnahmezustand einnehmen können, während die zweiten Teilnehmer sich dadurch auszeichnen, dass sie ein zweites Kommunikationsprotokoll verwenden oder auf ein zweites Kommunikationsprotokoll umschalten können. Es können auch weitere Teilnehmer am Netzwerk angeschlossen werden, sofern sie das beschriebene Verfahren nicht stören. Einige der in Figur zwei dargestellten Teilnehmer können auch optionale Teilnehmer sein, die nur in bestimmten Fällen, zum Beispiel bei Wartungsarbeiten oder bei Programmierarbeiten angeschlossen werden.

Figur 3 zeigt beispielhaft ein schematisches Blockschaltbild eines ersten Teilnehmers 200, mit einer Schnittstelle 201. Die Schnittstelle umfasst eine Busanschlusseinheit 210, sowie einen Kommunikationscontroller 220. Der Kommunikationscontroller 220 enthält einen Zähler 221 und eine Flankenerkennung 222.

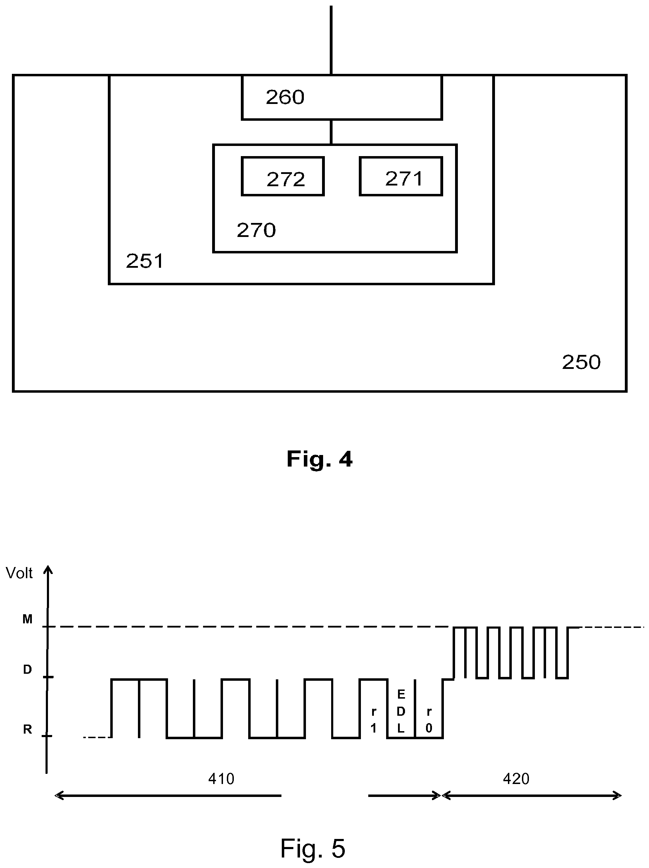

Figur 4 zeigt beispielhaft ein schematisches Blockschaltbild eines zweiten Teilnehmers 250, mit einer Schnittstelle 251. Die Schnittstelle umfasst eine Busanschlusseinheit 260, sowie einen Kommunikationscontroller 270, welcher zur Ausführung des erfindungsgemäßen Verfahrens eingerichtet ist. Der Kommunikationscontroller 270 enthält hierzu eine erste Protokollsteuereinheit 271 und eine zweite Protokollsteuereinheit 272. Es können auch zwei separate Kommunikationscontroller vorgesehen sein, welche jeweils eine der Protokollsteuereinheiten enthalten.

Figur 5 zeigt ein Beispiel für physikalische Signale, welche bei Verwendung des erfinungsgemäßen Verfahrens und einer geeigneten Busanschlusseinheit am Übergang vom ersten zum zweiten Kommunikationsprotokoll auf den Busleitungen durch den Sender gesendet werden. Die physikalischen Signale, hier Spannungen R und D, die in einem ersten Zeitbereich 410 auf dem Bus gesendet werden, unterscheiden sich von den physikalischen Signalen D und M, die in einem zweiten Zeitbereich 420 gesendet werden.

Im Folgenden werden mehrere Ausführungsbeispiele beschrieben, bei welchen die ersten Teilnehmer und die zweiten Teilnehmer jeweils unterschiedliche Kommunikationsprotokolle verwenden.

### Ausführungsbeispiele der Erfindung

Protokollausnahmezustand für Toleranz von CAN-Implementierungen gegenüber CAN FD-Nachrichten:
Ein Beispiel für einen Protokollausnahmezustand, das von einem Norm CAN-Netzwerk ausgeht, wird im Folgenden anhand der Figuren 2 und 3 dargestellt. In diesem Fall sind die ersten Teilnehmer 200 des in Figur 2 dargestellten Netzwerkes beispielsweise Steuergeräte, welche als Teil einer Schnittstelle 201 einen Kommunikationscontroller 220 mit einer modifizierten Norm CAN-Implementierung aufweisen. Die zweiten Teilnehmer des in Figur 2 dargestellten Netzwerkes sind hier beispielsweise Steuergeräte, welche als Teil einer Schnittstelle 251 einen Kommunikationscontroller mit einer CAN FD-Implementierung aufweisen.

Mit Implementierungen sind hardwaremäßige oder softwaremäßige Realisierungen des Kommunikationsprotokolls gemeint, also beispielsweise CAN-Kommunikationscontroller oder IP-Module, die einen CAN-Kommunikationscontroller beinhalten und in einem größeren Halbleiterbaustein integriert werden können.

Durch die Modifikation werden Norm CAN-Implementierungen, die also definitionsgemäß nicht zum Senden und Empfangen von CAN FD-Nachrichten in der Lage sind, in die Lage versetzt, eine nach einem zweiten, abweichenden Kommunikationsprotokoll ausgeführte Kommunikation zu tolerieren. In der hier dargestellten Ausführungsform ist dieses zweite, abweichende Kommunikationsprotokoll CAN FD. Das Tolerieren des abweichenden Kommunikationsprotokolls bedeutet, dass diese modifizierten Norm CAN-Implementierungen die nach dem zweiten Kommunikationsprotokoll, also in diesem Fall CAN FD, ablaufende Kommunikation ignorieren und nicht stören, indem sie beispielsweise Error-Frames erzeugen. Dies hat den Vorteil, dass eine Umschaltung von dem Norm CAN-Protokoll auf das schnellere zweite Protokoll, also CAN FD, ermöglicht wird, und zwar unter Verwendung der gleichen Busadern. Nach Abschluss der schnellen Kommunikation gemäß dem zweiten Kommunikationsprotokoll CAN FD erfolgt eine Rückumschaltung auf das ursprüngliche Norm-CAN Protokoll, sofern eine Wiederaufnahmebedingung für die Nutzung des ersten Kommunikationsprotokolls, also Norm CAN, erfüllt ist.

Für den hier beschriebenen Protokollausnahmezustand werden zwei vorhandene Funktionen des CAN-Protokolls kombiniert, um die so modifizierten Norm CAN-Implementierungen CAN FD tolerant zu machen. Zum einen wird ein Zähler 221 genutzt, der in Norm CAN-Implementierungen vorgesehen ist, um das Auftreten von elf aufeinanderfolgenden rezessiven Bits zu detektieren, wenn eine Norm CAN-Implementierung sich auf die Bus-Kommunikation aufsynchronisiert. Dies geschieht im Norm CAN beispielsweise nach einem Neustart oder beim Durchlaufen einer so genannten "Bus Off Recovery Sequenz" (siehe Kapitel 7 "Fault Confinement" der CAN Specification 2.0, Regel 12). Zweitens wird die Flankenerkennung 222 benutzt, die den CAN-Bus-seitigen Eingang einmal pro CAN-Bus-Zeiteinheit auf Flanken überprüft, um detektierte Flanken als Grundlage für die Bit-Synchronisation heranzuziehen. (Die Länge eines Bits besteht beim CAN-Bus aus mehreren, beispielsweise zwischen 8 und 25 CAN-Bus-Zeiteinheiten oder "Time Quanta", deren Länge wiederum vom internen Oszillatortakt des jeweiligen Busteilnehmers abgeleitet wird. Details sind der CAN-Spezifikation 2.0 zu entnehmen.)

Eine gemäß dem hier beschriebenen Beispiel modifizierte CAN-Implementierung verwendet folgenden Mechanismus: Die modifizierte CAN-Implementierung beteiligt sich zunächst wie üblich an der Kommunikation, das heißt sie versucht, sofern eine Nachricht zum Versenden vorliegt, durch Senden des Kopfteils der Nachricht im Rahmen der Arbitirierung Zugriff auf den Bus zu erlangen. Gibt es nichts zu senden, oder verliert sie die Arbitirierung, beobachtet sie den Busverkehr als Empfänger. Unmittelbar nach Erkennen eines rezessiven Bits an der Bitposition r0 in einer empfangenen Norm CAN-Nachricht mit Standard-Format, oder nach Erkennen eines rezessiven Bits an der Bitposition r1 in einer empfangenen Norm CAN-Nachricht mit extended Format (entsprechend der Position der EDL Bit einer CAN FD Nachricht, siehe Figuren 1a und 1b) startet die modifizierte Norm CAN-Implementierung ihre für die Protokolldekodierung zuständige Zustandsmaschine (Protokollzustandsmaschine) beziehungsweise die dafür vorgesehene Protokollsteuereinheit, beispielsweise ein in Hardware realisiertes Protokollsteuerwerk, neu, ohne ihre Fehler-Zähler zu ändern und ohne einen Error-Frame zu senden. Auf diese Weise nimmt sie einen Protokollausnahmezustand ein, in welchem sie auf das Eintreten einer Wiederaufnahmebedingung wartet. Bei Eintreten der Wiederaufnahmebedingung wird ein Wiederaufnahmeprozess durchlaufen, wie im Folgenden näher beschrieben wird.

Alternativ kann an Stelle des r0 Bits bei Standard-Format beziehungsweise an Stelle des r1 Bits bei Extended-Format für die Einleitung des Protokollausnahmezustands auch ein anderes Bit mit festgelegtem Wert innerhalb der Norm CAN-Nachricht verwendet werden, wie z.B. das r0 Bit im Extended Format.

### Protokollausnahmezustand:

Im Protokollausnahmezustand wird zuerst ein Neustart der Protokollzustandsmaschine oder der Protokollsteuereinheit durchgeführt. Nach dem Neustart wartet der Teilnehmer unter Nutzung des dafür vorgesehenen Zählers 221, welcher Bits mit einem vorgegebenen Wert zählt, auf eine Folge von in diesem Beispiel elf aufeinander folgenden rezessiven Bits. Es darf keine rezessiv zu dominant Flanke innerhalb dieser Folge auftreten, andernfalls startet der Zähler 221 neu. Dies wird durch die vorhandene Flankenerkennung 222 überwacht.

### Wiederaufnahmeprozess:

Wenn beispielsweise unter Nutzung des Zählers 221 und der Flankenerkennung 222 die Wiederaufnahmebedingung, im vorliegenden Beispiel also eine Folge von elf aufeinander folgenden rezessiven Bits erkannt wird, verlässt der Teilnehmer den Protokollausnahmezustand und synchronisiert sich auf die BusKommunikation. Damit ist der Teilnehmer wieder bereit für das Senden oder Empfangen von Norm CAN-Nachrichten, deren Beginn durch ein dominantes START OF FRAME-Bit signalisiert wird.

Der Vorteil des dargestellten Mechanismus ist, dass so sichergestellt ist, dass die modifizierten Norm CAN-Teilnehmer warten, bis die CAN FD-Nachricht übertragen wurde (oder bis sie durch einen Error-Frame unterbrochen wurde, falls ein Fehler durch einen CAN FD-Teilnehmer erkannt wird). Denn während der Übertragung der CAN FD-Nachricht wird das Erfordernis einer Folge von elf aufeinanderfolgenden rezessiven Bits nie erfüllt und die modifizierten Norm CAN-Teilnehmer durchlaufen keinen Wiederaufnahmeprozess, wie er oben beschrieben wurde. So ermöglicht das beschriebene Verfahren, dass die modifizierten Norm CAN-Implementierungen alle CAN FD-Nachrichten tolerieren.

Es ist vorteilhaft, dass die Bitdauer innerhalb der DATA-Phase der CAN FD-Nachricht (siehe Abbildung 2) nicht kürzer als eine CAN-Bus-Zeiteinheit der CAN FD Arbitration-Phase. Sonst könnte es auftreten, dass elf aufeinander folgende rezessive Bits durch den modifizierten Norm CAN-Teilnehmer in einer CAN FD-Nachricht in seltenen Fällen zufällig ausgelesen werden.

Die Detektion einer CAN FD-Nachricht verursacht kein Inkrement der Fehlerzähler, so dass wird die modifizierten Norm CAN-Implementierungen unmittelbar nach dem Ende der schnelleren CAN FD-Nachricht die Buskommunikation gemäß Norm-CAN-Protokoll fortsetzen können.

Protokollausnahmezustand für Toleranz von modifizierten CAN FD-Implementierungen gegenüber Nachrichten gemäß weiterentwickelten Protokollen:
Ein weiteres Beispiel für einen Protokollausnahmezustand, das von einem CAN FD-Netzwerk ausgeht, ist im Folgenden, wiederum unter Bezugnahme auf die Figuren 2 und 3, dargestellt. In diesem Fall sind die ersten Teilnehmer 200 des in Figur 2 dargestellten Netzwerkes beispielsweise Steuergeräte, welche eine Vorrichtung, also wie in Figur 3 dargestellt als Teil einer Schnittstelle 201 einen Kommunikationscontroller 220 mit einer modifizierten CAN FD-Implementierung aufweisen. Die zweiten Teilnehmer 250 des in Figur 2 dargestellten Netzwerkes sind in diesem Beispiel Steuergeräte, welche als Teil einer Schnittstelle 251 einen Kommunikationscontroller aufweisen, der eine Implementierung eines weiteren Kommunikationsprotokolls enthält. Das weitere Kommunikationsprotokoll kann beispielsweise eine Weiterentwicklung des CAN FD-Protokolls sein, welche beispielsweise in Abhängigkeit vom Inhalt des Data Length Code noch längere Datenfelder zulässt, als im CAN FD vorgesehen sind. Weiterhin sind zusätzliche Steuerbits im Control Field vorstellbar, beispielsweise zum Zweck der Datenabsicherung, oder um zusätzliche Zustandsinformationen unter den Teilnehmern zu übertragen. Alternativ oder zusätzlich kann das weitere Kommunikationsprotokoll eine modifizierte Berechnung für den Inhalt des CRC Field und / oder eine abweichende Größe des CRC Field vorsehen. Es können auch mehrere Kommunikationscontroller vorgesehen sein, von denen einer die CAN FD-Kommunikation ausführt und ein zweiter das weitere Kommunikationsprotokoll ausführt.

Auch das CAN FD Protokoll gemäß der veröffentlichten Spezifikation weist an einigen vorgegebenen Positionen innerhalb der Nachricht Bits mit vorgegebenen Werten auf. Wie in Figur 1b dargestellt enthält beispielsweise eine CAN FD Nachricht im Standard-Format und auch im Extended-Format je ein reserviertes Bit r1 als letztes Bit im Arbitration Field und ein reserviertes Bit r0, welches auf das EDL-Bit folgt, im Control Field.

Dementsprechend kann der Mechanismus, der oben für modifizierte Norm CAN-Implementierungen beschrieben wurde, analog auf modifizierte CAN FD-Implementierungen angewendet werden. Die modifizierten CAN FD-Implementierungen müssen hierzu die beiden Mechanismen enthalten, welche hierfür benutzt werden, nämlich einerseits den Zähler 221 für in diesem Beispiel elf aufeinanderfolgende rezessive Bits, und andererseits die Flankenerkennung 222. Dies ist üblicherweise gegeben. In anderen Ausführungsbeispielen können andere Mechanismen verwendet werden, welche für die Wiederaufnahme der Kommunikation nach Neustart oder Fehlererkennung dienen, und welche zur Ausführung des Verfahrens wiederverwendet werden können.

Die für das hier beschriebenen Beispiel eines Protokollausnahmezustands modifizierte CAN FD-Implementierung verwendet nun folgenden Mechanismus: Die modifizierte CAN FD-Implementierung beteiligt sich zunächst wie üblich an der Kommunikation, das heißt sie versucht, sofern eine Nachricht zum Versenden vorliegt, durch Senden des Kopfteils der Nachricht im Rahmen der Arbitirierung Zugriff auf den Bus zu erlangen. Gibt es nichts zu senden, oder verliert sie die Arbitirierung, beobachtet sie den Busverkehr als Empfänger. Unmittelbar nach Erkennen eines rezessiven Bits an der Bitposition r0 in einer CAN FD-Nachricht mit Standard-Format, oder nach Erkennen eines rezessiven Bits an der Bitposition r0 in einer CAN FD-Nachricht mit extended Format (siehe Figuren 1a und 1b) startet die modifizierte CAN FD-Implementierung ihre für die Protokolldekodierung zuständige Zustandsmaschine (Protokollzustandsmaschine) beziehungsweise die dafür vorgesehene Protokollsteuereinheit, beispielsweise ein in Hardware realisiertes Protokollsteuerwerk, neu, ohne ihre Fehler-Zähler zu ändern und ohne einen Error-Frame zu senden. Auf diese Weise nimmt sie einen Protokollausnahmezustand ein, in welchem sie auf das Eintreten einer Wiederaufnahmebedingung wartet. Die Wiederaufnahmebedingung und der dadurch eingeleitete Wiederaufnahmeprozess sehen im Wesentlichen gleich aus, wie schon früher für das erste Ausführungsbeispiel beschrieben. CAN FD-Implementierungen weisen üblicherweise die analogen Mechanismen, also insbesondere einen Zähler 221 für rezessive Bits und eine Flankenerkennung 222, auf, welche hierfür verwendet werden können.

Alternativ kann an Stelle des r0 Bits bei Standard-Format beziehungsweise Extended-Format für die Einleitung des Protokollausnahmezustands auch ein anderes Bit mit festgelegtem Wert innerhalb der CAN FD-Nachricht verwendet werden, wie z.B. das r1 Bit am Ende des Arbitration Field.

Der Vorteil des dargestellten Mechanismus ist, dass so sichergestellt ist, dass die modifizierten CAN FD-Teilnehmer warten, bis die Nachricht gemäß dem weiteren Kommunikationsprotokoll übertragen wurde (oder bis sie gegebenenfalls durch einen entsprechenden Mechanismus unterbrochen wurde, falls ein Fehler erkannt wird). Voraussetzung ist, dass das weitere Kommunikationsprotokoll derart ausgeprägt ist, dass während der Übertragung das Erfordernis einer Folge von elf aufeinanderfolgenden rezessiven Bits nicht erfüllt wird und die modifizierten CAN FD-Teilnehmer demnach keinen Wiederaufnahmeprozess durchlaufen, wie er oben beschrieben wurde. So ermöglicht das beschriebene Verfahren, dass die modifizierten CAN FD-Implementierungen die Nachrichten, die gemäß dem weiteren Kommunikationsprotokoll übertragen werden, tolerieren.

Nutzung des Protokollausnahmezustands für Toleranz von modifizierten Norm CAN- oder CAN FD-Implementierungen gegenüber Protokollumschaltung:
Der beschriebene Protokollausnahmezustand kann erfindungsgemäß genutzt werden, um in gemischten Netzwerken eine Protokollumschaltung auf ein abweichendes Kommunikationsprotokoll durchzuführen, welches anderen Anforderungen genügt, als das erste Kommunikationsprotokoll. Aufgrund der Toleranz der ersten Teilnehmer im Protokollausnahmezustand können zweite Teilnehmer unter Nutzung dieses abweichenden Kommunikationsprotokolls Daten austauschen oder übertragen, ohne durch die ersten Teilnehmer gestört zu werden. Dies wird im Folgenden beispielhaft ausgeführt. Das Beispiel geht von einem Norm CAN- oder CAN FD-Netzwerk aus, jedoch kann die Erfindung auch ausgehend von anderen Netzwerken, welche die Merkmale des Oberbegriffes von Anspruch 1 erfüllen, dargestellt werden.

Eine Ausführungsform der vorliegenden Erfindung, die von einem Norm CAN-Netzwerk oder von einem CAN FD-Netzwerk ausgeht, ist im Folgenden, nun unter Bezugnahme auf die Figuren 2, 3 und 4, dargestellt. In diesem Fall sind die ersten Teilnehmer 200 des in Figur 2 dargestellten Netzwerkes beispielsweise Steuergeräte, welche wie in Figur 3 dargestellt als Teil einer Schnittstelle 201 einen Kommunikationscontroller 220 mit einer modifizierten Norm CAN-Implementierung oder einer modifizierten CAN FD-Implementierung aufweisen. Diese ersten Teilnehmer unterscheiden sich im wesentlichen nicht von den ersten Teilnehmern der beiden vorangegangenen Beispiele für den Protokollausnahmezustand. Es können auch sowohl modifizierte Norm CAN-Implementierungen, als auch modifizierte CAN FD-Implementierungen als erste Teilnehmer vorhanden sein.

Die zweiten Teilnehmer 250 des in Figur 2 dargestellten Netzwerkes sind in diesem weiteren Beispiel Steuergeräte, welche als Teil einer Schnittstelle 251 einen Kommunikationscontroller 270 aufweisen, der erfindungsgemäß zwischen Norm CAN-Kommunikation beziehungsweise CAN FD-Kommunikation und wenigstens einem weiteren Kommunikationsprotokoll oder Kommunikationsmodus umschalten kann. Ein derartiger Teilnehmer ist in Figur 4 schematisch dargestellt. Der Kommunikationscontroller 270 enthält eine erste Protokollsteuereinheit 271 für das Norm CAN- odere CAN FD-Protokoll und eine zweite Protokollsteuereinheit 272 für das wenigstens eine weitere Kommunikationsprotokoll. Es können in einer alternativen Form der Erfindung, die nicht in Figur 4 dargestellt ist, auch mehrere separate Kommunikationscontroller vorgesehen sein, von denen einer die Norm CANbeziehungsweise CAN FD-Kommunikation ausführt und wenigstens ein weiterer Kommunikationscontroller das oder die weiteren Kommunikationsprotokoll(e) ausführt. In diesem Fall kann eine Verbindung zwischen dem ersten und dem zweiten Kommunikationscontroller oder den weiteren Kommunikationscontrollern vorgehalten sein, so dass der erste Kommunikationscontroller den zweiten oder weiteren Kommunikationscontroller informieren kann, wenn eine Bedingung für die Nutzung des zweiten oder weiteren Kommunikationsprotokolls vorliegt.

Sofern im Kontext der vorliegenden Erfindung von einem zweiten Kommunikationsprotokoll die Rede ist, ist dies im Falle mehrerer weiterer Kommunikationsprotokolle beziehungsweise Kommunikationscontroller als eines der weiteren Kommunikationsprotokolle zu verstehen.

Das weitere Kommunikationsprotokoll muss über die für die CAN Kommunikation vorgesehenen Busleitungen übertragbar sein und darf keine Abschnitte enthalten, welche für einen modifizierten Norm CAN-Controller oder für einen CAN FD-Controller wie eine Folge von elf aufeinanderfolgenden rezessiven Bits aussehen. Die weiteren Daten können nach einem geeigneten Startsignal als beliebige, definierte Folge von Dateneinheiten, z.B. als Folge von Bytes oder 16-Bit-, 32-Bit- oder 64-Bit-Einheiten, oder im UART-Format oder im FlexRay-Format oder in einem Ethernet-MAC-Format übertragen werden. Es kann im Prinzip jedes Kommunikationsprotokoll verwendet werden, das sich als Folge von Spannungspegeln auf einer zweiadrigen Leitung darstellen lässt und die genannten Voraussetzungen erfüllt.

Möchte ein solcher zweiter Teilnehmer 250 Daten gemäß einem weiteren Kommunikationsprotokoll über das Netzwerk übertragen, so verwendet er gemäß dem hier beschriebenen Beispiel der vorliegenden Erfindung folgenden Mechanismus: Er beteiligt sich an der Kommunikation gemäß Norm CAN- oder CAN FD-Protokoll und versucht, durch Senden des Kopfteils einer Norm CANbeziehungsweise CAN FD-Nachricht im Rahmen der Arbitirierung Zugriff auf den Bus zu erlangen. Durch Wahl eines hinreichend niedrigwertigen Identifiers, entsprechend einer hinreichend hohen Priorität, kann sichergestellt werden, dass dies gelingt, wenn es notwendig ist. Die anderen Teilnehmer der Buskommunikation nehmen nach Verlieren der Arbitrierung eine Rolle als Empfänger ein.

Der zweite Teilnehmer, der Sender der Nachricht ist, sendet nun in der Nachricht Daten, welche dazu führen, dass die ersten Teilnehmer in einen Protokollausnahmezustand überführt werden. Dies kann, wie in den vorhergehenden Beispielen beschrieben, durch Senden eines rezessiven Bits an der Bitposition r0 oder r1 in einer CAN FD-Nachricht mit Standard-Format, oder durch Senden eines rezessiven Bits an der Bitposition r0 oder r1 in einer CAN FD-Nachricht mit extended Format (siehe Figuren 1a und 1b) erfolgen. Befinden sich unter den ersten Teilnehmern 200 modifizierte Norm CAN-Teilnehmer, so nehmen diese aufgrund des rezessiven Pegels des EDL-Bits des versendeten Kopfteils einer CAN FD-Nachricht schon den Protokollausnahmezustand ein. Die CAN FD-Teilnehmer unter den ersten Teilnehmern 200 nehmen aufgrund des rezessiven Pegels an der Position des r0- oder r1-Bits den Protokollausnahmezustand ein.

Nachdem alle ersten Teilnehmer 200 in den Protokollausnahmezustand überführt sind, beginnt der zweite Teilnehmer, der Sender der Nachricht ist, mit der Datenübertragung unter Verwendung des weiteren Komunikationprotokolls. Er weist hierfür den umschaltbaren Kommunikationscontroller 270 oder einen Schaltmechanismus zur Umschaltung zwischen mehreren vorgesehenen Kommunikationscontrollern auf, wie bereits ausgeführt. Die Umschaltung kann unmittelbar nach Versenden des letzten Bits, welches für die Überführung der ersten Teilnehmer in den Protokollausnahmezustand erforderlich ist, erfolgen, wie es beispielsweise in Figur 5 dargestellt ist. Sie kann auch mit einem Zeitversatz von beispielsweise einer vorgegebenen oder vorgebbaren Anzahl von Nachlauf-Bits. Die Nachlauf-Bits können hierbei hinsichtlich Bitdauer oder physikalischer Realisierung als Spannungsdifferenz zwischen den Busleitungen gemäß den Randbedingungen des ersten Kommunikationsprotokolls definiert werden. Durch Vorsehen solcher Nachlauf-Bits kann auch noch beispielsweise eine Information übertragen werden, die angibt, nach welchem weiteren Kommunikationsprotokoll nach der Umschaltung Daten übertragen werden. Dies ist insbesondere vorteilhaft, wenn der zweite Teilnehmer, der Sender der Nachricht ist, zur Datenübertragung gemäß mehreren weiteren Übertragungsprotokollen eingerichtet ist.

Die ersten Teilnehmer 200 bleiben im Protokollausnahmezustand, bis die Wiederaufnahmebedingung eintritt. Dadurch kann der zweite Teilnehmer, der Sender der Nachricht ist, Daten gemäß des weiteren Kommunikationsprotokolls versenden, die ein oder mehrere weitere Teilnehmer, sofern diese dafür eingerichtet sind, empfangen können. Die weiteren zweiten Teilnehmer, die nicht Sender sind, empfangen die übertragenen Daten gemäß dem weiteren Kommunikationsprotokoll. Es kann vorgesehen werden, dass sie nach Abschluss der Datenübertragung gemäß dem weiteren Kommunikationsprotokoll ebenfalls auf eine Wiederaufnahmebedingung für die Kommunikation gemäß dem ersten Kommunikationsprotokoll warten, wie auch die ersten Teilnehmer. Sie können aber auch beispielsweise durch Informationen, die in den übertragenen Daten enthalten sind, aktiv wieder für die Kommunikation gemäß dem ersten Kommunikationsprotokoll umgeschaltet werden. Hierbei ist vorausgesetzt dass, dass im Zuge der Kommunikation mittels des weiteren Kommunikationsprotokolls die Wiederaufnahmebedingung, also beispielsweise eine Folge von elf aufeinanderfolgenden rezessiven Bits, nicht auftritt. Ist die Kommunikation mittels des weiteren Kommunikationsprotokolls abgeschlossen, verbleibt die Busleitung datenfrei, so dass die Wiederaufnahmebedingung eintritt und die ersten Teilnehmer und die zweiten Teilnehmer wieder eine Kommunikation gemäß Norm CAN-Protokoll oder CAN FD-Protokoll aufnehmen können.

Auf die dargestellte Weise können einzelne Teilnehmer des Netzwerks für eine schnelle Kommunikation eingerichtet werden, während andere Teilnehmer, nämlich die ersten Teilnehmer 200 des Netzwerks, nur minimal geändert werden müssen, wie oben beschrieben. Beispielsweise könnte ein zentrales Steuergerät oder ein zentrales Gateway, welches umfangreiche Software beispielsweise zur Steuerung der Kommunikation enthält, mit wenigstens einem Programmier-, Service- oder Eingabe-Gerät, welches hierzu angeschlossen wird, Daten austauschen oder von diesem Daten empfangen, ohne durch die anderen Teilnehmer am Netzwerk gestört zu werden. Es könnten auch mehrere dafür eingerichtete Steuergeräte über den beschriebenen Mechanismus mit wenigstens einem Programmier-, Service- oder Eingabe-Gerät, welches hierzu angeschlossen wird, Daten austauschen oder von diesem Daten empfangen. Die Daten können hierbei nacheinander oder abschnittsweise nacheinander oder abwechselnd oder auch parallel, beispielsweise durch Verwendung mehrerer, voneinander trennbarer Frequenzbänder bei den verwendeten weiteren Kommunikationsprotokollen, übertragen werden. Weiterhin denkbar wäre die Nutzung des Verfahrens, um Daten aus Nachrichten , die gemäß dem ersten Kommunikationsprotokoll ausgetauscht werden, zum Zweck der Redundanz oder der Verschlüsselung zusätzlich als Daten gemäß dem zweiten Kommunikationsprotokoll zu übertragen. So können bestimmte, ausgewählte Nachrichten aus Gründen von Redundanz zusätzlich in einem abweichenden Format versendet werden oder Daten im Zusammenhang mit einer Verschlüsselung (z.B. Schlüssel oder verschlüsselte Daten oder Verschlüsselungsinformationen) versendet werden.

Um sicherzustellen, dass im Zuge der Kommunikation mittels des weiteren Kommunikationsprotokolls die Wiederaufnahmebedingung, also beispielsweise eine Folge von elf aufeinanderfolgenden rezessiven Bits, nicht auftritt, kann auch die physikalische Übertragungsschicht des weiteren Kommunikationsprotokolls oder der weiteren Kommunikationsprotokolle gegenüber der Übertragungsschicht des ersten Kommunikationsprotokolls angepasst werden:
Hierfür kann beispielsweise ein neuartiger Transceiver 260 eingesetzt werden, der so eingerichtet ist, dass er zusätzlich zu den physikalischen Signalen des ersten Kommunikationsprotokolls weitere physikalische Signale wenigstens eines weiteren Kommunikationsprotokolls generieren und ermitteln kann, welche so ausgeprägt sind, dass ein Ansprechen der Wiederaufnahmebedingung wirksam vermieden wird. Beispielsweise kann dies dadurch erreicht werden, dass für die Übertragung nach dem zweiten Kommunikationsprotokoll physikalische Signale wie z.B. Differenzspannungspegel verwendet werden, welche bezüglich des ersten Kommunikationsprotokolls, also beispielsweise in dem für das erste Kommunikationsprotokoll vorgesehenen Kommunikationscontroller, wie ein bestimmtes physikalisches Signal der Übertragung nach dem ersten Kommunikationsprotokoll interpretiert werden, welches das Eintreten der Wiederaufnahmebedingung vermeidet. Ist, wie weiter oben beschrieben, die Wiederaufnahmebedingung als vorgegebene oder vorgebbare Anzahl von Bits mit vorgegebenen Werten, beispielsweise von aufeinanderfolgenden rezessiven Bits, definiert, so kann die Übertragung nach dem zweiten Kommunikationsprotokoll etwa physikalische Signale verwenden, welche bezüglich des ersten Kommunikationsprotokolls als davon abweichende Bits, also beispielsweise als dominante Bits interpretiert werden. Dies wird im Folgenden Beispiel anhand der Figur 5 noch näher erläutert.

Beispielsweise könnte ausgehend von einem üblichen CAN-Transceiver eingeführt werden, dass der neuartige Transceiver nicht nur die zwei von CAN bekannten Pegel "rezessiv" und "dominant" kennt, sondern wenigstens einen zusätzlichen Pegel (z.B. "maximum"), beispielsweise:
- Rezessiver Pegel R: Der Transceiver des Senders treibt keinen Strom. Spannungsdifferenz zwischen den Busleitungen beispielsweise 0 Volt.
- Dominanter Pegel D: Der Transceiver des Senders treibt mittels geeigneter Mittel, z.B. einer Stromquelle einen Strom, so dass die sich die normale Norm CAN Spannungsdifferenz einstellt. Spannungsdifferenz zwischen den Busleitungen beispielsweise 2 Volt.
- Maximum Pegel M: Der Transceiver des Senders treibt mittels geeigneter Mittel, z.B. einer Stromquelle einen stärkeren Strom, so dass die sich eine höhere Spannungsdifferenz einstellt. Spannungsdifferenz zwischen den Busleitungen beispielsweise 4 Volt.
Die ersten beiden Pegel werden von allen beteiligten Norm CAN-, CAN FD- und neuartigen Transceivern als rezessiv R beziehungsweise dominant D erkannt. Der dritte Pegel wird von allen üblichen CAN- und CAN FD-Transceivern als dominant D erkannt und von dem neuartigen Transceiver als maximum M.

Figur 5 zeigt ein Beispiel für physikalische Signale, welche am Übergang vom ersten zum zweiten Kommunikationsprotokoll auf den Busleitungen durch den neuartigen Transceiver des Senders erzeugt werden können. In einem ersten Abschnitt 410 erfolgt die Kommunikation nach dem ersten Kommunikationsprotokoll. Die physikalischen Signale sind Differenzspannungswerte von 0 Volt oder 2 Volt, entsprechend dem rezessivem Pegel R oder dem dominantem Pegel D. In einem zweiten Abschnitt 420 erfolgt die Kommunikation nach dem zweiten Kommunikationsprotokoll. Die physikalischen Signale sind Differenzspannungswerte von 2 Volt oder 4 Volt, entsprechend dem Maximum- Pegel M oder dem dominantem Pegel D.

Der neuartige Transceiver 260 weist beispielsweise einen zusätzlichen Ausgang auf, der an den erfindungsgemäß modifizierten Kommunikationscontroller beziehungsweise gegebenenfalls an den weiteren Kommunikationscontroller, der das oder die weiteren Kommunikationsprotokoll(e) ausführt, angeschlossen ist. Beispielsweise könnte als Protokoll "Universal Asynchronous Receiver Transmitter" (UART) oder FlexRay verwendet werden, aber auch im Prinzip jedes andere serielle Übertragungsprotokoll, beispielsweise auch ein Ethernet-MAC-Format. Abhängig davon, ob der Buspegel als "maximum" M oder "dominant" D ermittelt wird, wird an den Kommunikationscontroller ein unterschiedliches logisches Signal weitergegeben. Wenn also der zweite Teilnehmer, der Sender der Nachricht ist, die ersten Teilnehmer 200 in den Protokollausnahmezustand überführt hat, wird anschließend nur in den beiden Pegeln "maximum" und "dominant" gesendet. Dadurch ermitteln die Norm CAN- bzw. CAN FD-Controller am Empfangs-Ausgang des Transceivers immer nur einen dominanten Buspegel. Die Wiederaufnahmebedingung von elf aufeinanderfolgenden rezessiven Bits tritt nicht ein, solange auf diese Weise Daten übertragen werden. Dies gilt, ohne dass es irgendwelche Einschränkungen in den möglichen übertragenen Datenformaten des zweiten Kommunikationsprotokolls gibt. Es können natürlich auch mehrere zussätzliche Pegel wie z.B. "maximum 1" und "maximum 2 u.s.w. festgelegt werden. Sofern der neuartige Transceiver in der Lage ist, diese Pegel sicher zu unterscheiden, kann für die Übertragung eine entsprechende Codierung mit mehreren Pegeln verwendet werden. Entsprechende Verfahren sind beispielsweise von Ethernet-Netzwerken bekannt.

Die beschriebene Umschaltung zwischen den wenigstens zwei getriebenen Pegeln "dominant" D und "maximum" Mhat den weiteren Vorteil, dass die übertragenen Bits mit kürzerer Bitdauer übertragen werden können, da die Steilheit der Flanken nicht mehr davon abhängt, wie sich ein Spannungspegel durch über die Abschlusswiderstände einstellt.

Es brauchen lediglich die Busteilnehmer mit den neuartigen Transceivern ausgerüstet werden, welche das weitere Kommunikationsprotokoll verwenden. Die restlichen Busteilnehmer können herkömmliche Transceiver verwenden. Anstelle der Umschaltung zwischen dominantem und "maximum" Pegel könnte man auch den CAN Bus auf dominantem Pegel halten und die ASC-Daten durch geeignete Mittel aufmodulieren.

## Patentansprüche

1. Verfahren zum Austausch von Daten zwischen Teilnehmern, die mittels eines Bussystems miteinander verbunden sind,
wobei Nachrichten, die Daten enthalten, gemäß einem ersten Kommunikationsprotokoll ausgetauscht werden,
wobei die Nachrichten aus einer Sequenz von Bits bestehen,
wobei wenigstens ein Steuerbit mit einer vorgegebenen Position innerhalb der Nachricht, die gemäß dem ersten Kommunikationsprotokoll ausgetauscht wird, einen vorgegebenen Wert aufweisen muss,
wobei für jede Nachricht ein Teilnehmer die Rolle des Senders innehat und wenigstens ein anderer Teilnehmer als Empfänger die Nachricht empfängt und eine Fehlerüberwachung für die Nachricht durchführt,
**dadurch gekennzeichnet, dass**
durch Senden des Steuerbits mit einem von dem vorgegebenen Wert abweichenden Wert wenigstens ein erster Empfänger in einen Protokollausnahmezustand überführt wird, so dass dieser die Fehlerüberwachung aussetzt, bis eine Wiederaufnahmebedingung für die Nutzung des ersten Kommunikationsprotokolls erfüllt ist,
wobei der Sender nach dem Senden des Steuerbits mit einem von dem vorgegebenen Wert abweichenden Wert beginnt, weitere Daten gemäß einem zweiten Kommunikationsprotokoll an wenigstens einen zweiten Empfänger zu übertragen,
wobei während der Übertragung nach dem zweiten Kommunikationsprotokoll die Wiederaufnahmebedingung für die Nutzung des ersten Kommunikationsprotokolls nicht erfüllt ist, so dass sichergestellt ist, dass der wenigstens eine erste Empfänger im Protokollausnahmezustand abwartet, bis die Nachricht gemäß dem zweiten Kommunikationsprotokoll übertragen wurde;
wobei als Wiederaufnahmebedingung für die Nutzung des ersten Kommunikationsprotokolls eine vorgegebene oder vorgebbare Anzahl von Bits mit vorgegebenen Werten definiert ist.

2. Verfahren nach Anspruch 1,
**dadurch gekennzeichnet, dass**
Werte von Bits auf dem Bussystem durch physikalische Signale dargestellt werden, wobei für die Übertragung nach dem zweiten Kommunikationsprotokoll physikalische Signale verwendet werden, welche sich von den physikalischen Signalen für die Übertragung nach dem ersten Kommunikationsprotokolls unterscheiden.

3. Verfahren nach Anspruch 1 oder 2,
**dadurch gekennzeichnet, dass**
für die Übertragung nach dem zweiten Kommunikationsprotokoll physikalische Signale verwendet werden, welche bezüglich des ersten Kommunikationsprotokolls wie ein bestimmtes physikalisches Signal der Übertragung nach dem ersten Kommunikationsprotokoll interpretiert werden, welches das Eintreten der Wiederaufnahmebedingung vermeidet.

4. Verfahren nach einem der Ansprüche 1 bis 3,
**dadurch gekennzeichnet, dass**
der Sender nach dem Senden des wenigstens einen Steuerbits mit einem von dem vorgegebenen Wert abweichenden Wert eine Information überträgt, gemäß welchem Kommunikationsprotokoll er die weiteren Daten übertragen wird, bevor er beginnt, die weiteren Daten gemäß diesem Kommunikationsprotokoll zu übertragen.

5. Verfahren nach einem der Ansprüche 1 bis 4,
**dadurch gekennzeichnet, dass**
der wenigstens eine Empfänger den Protokollausnahmezustand einnimmt, indem er einen Neustart einer Protokollsteuereinheit oder einer Protokollzustandsmaschine durchführt.

6. Verfahren nach einem der Ansprüche 1 bis 5, **dadurch gekennzeichnet, dass**
als Wiederaufnahmebedingung für die Nutzung des ersten Kommunikationsprotokolls eine vorgegebene oder vorgebbare Dauer ausbleibender Kommunikation auf dem Bus definiert ist.

7. Verfahren nach einem der Ansprüche 1 bis 6, **dadurch gekennzeichnet, dass**
die gemäß dem ersten Kommunikationsprotokoll zu übertragenden Nachrichten einen Kopfteil, ein Datenfeld und einen Schlussteil aufweisen, wobei anhand einer im Kopfteil der Nachricht enthaltenen Kennung festgelegt wird, welcher Teilnehmer Sendezugriff auf den Bus erhält, wenn mehrere Teilnehmer gleichzeitig versuchen, eine Nachricht zu senden, wobei das wenigstens eine Steuerbit im Kopfteil enthalten ist.

8. Verfahren nach einem der Ansprüche 1 bis 7, **dadurch gekennzeichnet, dass**
gemäß dem zweiten Kommunikationsprotokoll die weiteren Daten nach einem geeigneten Startsignal als beliebige, definierte Folge von Dateneinheiten oder im UART-Format oder im FlexRay-Format oder in einem Ethernet-MAC-Format übertragen werden.

9. Verfahren nach einem der Ansprüche 1 bis 8, **dadurch gekennzeichnet, dass**
die weiteren Daten gemäß dem zweiten Kommunikationsprotokoll an mehrere Empfänger parallel unter Verwendung mehrerer, voneinander trennbarer Frequenzbänder übertragen werden.

10. Verfahren nach einem der Ansprüche 1 bis 9, **dadurch gekennzeichnet, dass**
durch das Verfahren Daten aus Nachrichten, die gemäß dem ersten Kommunikationsprotokoll ausgetauscht werden, zum Zweck der Redundanz oder der Verschlüsselung zusätzlich als Daten gemäß dem zweiten Kommunikationsprotokoll übertragen werden.

11. Vorrichtung zum Austausch von Daten zwischen Teilnehmern, die mittels eines Bussystems miteinander verbunden sind,
die Mittel aufweist, so dass Nachrichten, die Daten enthalten, gemäß einem ersten Kommunikationsprotokoll ausgetauscht werden,
wobei die Nachrichten aus einer Sequenz von Bits bestehen,
wobei wenigstens ein Steuerbit mit einer vorgegebenen Position innerhalb der Nachricht, die gemäß dem ersten Kommunikationsprotokoll ausgetauscht wird, einen vorgegebenen Wert aufweisen muss,
**dadurch gekennzeichnet, dass**
die Vorrichtung Mittel enthält, um nach Empfangen des Steuerbits mit einem von dem vorgegebenen Wert abweichenden Wert durch wenigstens einen ersten Empfänger diesen wenigstens einen Empfänger in einen Protokollausnahmezustand zu überführen, so dass dieser die Fehlerüberwachung aussetzt, bis eine Wiederaufnahmebedingung für die Nutzung des ersten Kommunikationsprotokolls erfüllt ist, wobei als Wiederaufnahmebedingung für die Nutzung des ersten Kommunikationsprotokolls eine vorgegebene oder vorgebbare Anzahl von Bits mit vorgegebenen Werten definiert ist,

12. Vorrichtung nach Anspruch 11, **dadurch gekennzeichnet, dass**
die Vorrichtung Mittel aufweist, um als Empfänger bei Empfang des Steuerbits mit einem von dem vorgegebenen Wert abweichenden Wert die weiteren Daten gemäß dem zweiten Kommunikationsprotokoll zu empfangen.

13. Vorrichtung nach einem der Ansprüche 11 bis 12, **dadurch gekennzeichnet, dass**
die Vorrichtung Mittel aufweist, um nach dem Senden des Steuerbits mit einem von dem vorgegebenen Wert abweichenden Wert eine Information zu übertragen, gemäß welchem zweiten Kommunikationsprotokoll die weiteren Daten übertragen werden.

## Claims

1. Method for exchanging data between participants connected to one another by way of a bus system,
wherein messages that contain data are exchanged in accordance with a first communication protocol,
wherein the messages consist of a sequence of bits, wherein at least one control bit having a predefined position within the message that is exchanged in accordance with the first communication protocol has to have a predefined value,
wherein, for each message, one participant occupies the role of transmitter and at least one other participant receives the message as receiver and performs error monitoring for the message,
**characterized in that**
by transmitting the control bit with a value different from the predefined value, at least one first receiver is transferred into a protocol exception state, such that said receiver suspends error monitoring until a resumption condition for using the first communication protocol is met,
wherein the transmitter, following transmission of the control bit with a value different from the predefined value, begins to transmit further data to at least one second receiver in accordance with a second communication protocol,
wherein, during the transmission in accordance with the second communication protocol, the resumption condition for using the first communication protocol is not met, such that it is ensured that the at least one first receiver remains in the protocol exception state until the message has been transmitted in accordance with the second communication protocol;
wherein a predefined or predefinable number of bits with predefined values is defined as resumption condition for using the first communication protocol.

2. Method according to Claim 1,
**characterized in that**
values of bits on the bus system are embodied by physical signals, wherein physical signals are used for the transmission in accordance with the second communication protocol, these differing from the physical signals for the transmission in accordance with the first communication protocol.

3. Method according to Claim 1 or 2,
**characterized in that**
physical signals are used for the transmission in accordance with the second communication protocol, these being interpreted, in relation to the first communication protocol, as a specific physical signal for the transmission in accordance with the first communication protocol that avoids the occurrence of the resumption condition.

4. Method according to one of Claims 1 to 3,
**characterized in that**
the transmitter, following transmission of the at least one control bit with a value different from the predefined value, transmits information as to the communication protocol according to which it will transmit the further data, before it begins to transmit the further data in accordance with this communication protocol.

5. Method according to one of Claims 1 to 4,
**characterized in that**
the at least one receiver adopts the protocol exception state by restarting a protocol control unit or a protocol state machine.

6. Method according to one of Claims 1 to 5,
**characterized in that**
a predefined or predefinable duration of lack of communication on the bus is defined as resumption condition for using the first communication protocol.

7. Method according to one of Claims 1 to 6,
**characterized in that**
the messages to be transmitted in accordance with the first communication protocol have a header, a data field and an end part, wherein an identifier contained in the header of the message is used to establish which participant receives transmit access on the bus if a plurality of participants simultaneously attempt to transmit a message, wherein the at least one control bit is contained in the header.

8. Method according to one of Claims 1 to 7,
**characterized in that,**
in accordance with the second communication protocol, the further data are transmitted, following a suitable start signal, as any desired defined sequence of data units or in the UART format or in the FlexRay format or in an Ethernet MAC format.

9. Method according to one of Claims 1 to 8,
**characterized in that**
the further data in accordance with the second communication protocol are transmitted to a plurality of receivers in parallel using a plurality of frequency bands that are able to be separated from one another.

10. Method according to one of Claims 1 to 9,
**characterized in that**
data from messages that are exchanged in accordance with the first communication protocol are additionally transmitted as data in accordance with the second communication protocol for redundancy or encryption purposes by way of the method.

11. Device for exchanging data between participants connected to one another by way of a bus system,
having means such that messages that contain data are exchanged in accordance with a first communication protocol,
wherein the messages consist of a sequence of bits, wherein at least one control bit having a predefined position within the message that is exchanged in accordance with the first communication protocol has to have a predefined value,
**characterized in that**
the device contains means, following reception of the control bit with a value different from the predefined value by at least one first receiver, for transferring this at least one receiver into a protocol exception state, such that said receiver suspends error monitoring until a resumption condition for using the first communication protocol is met,
wherein a predefined or predefinable number of bits with predefined values is defined as resumption condition for using the first communication protocol.

12. Device according to Claim 11,
**characterized in that**
the device has means for receiving the further data in accordance with the second communication protocol as receiver upon reception of the control bit with a value different from the predefined value.

13. Device according to either of Claims 11 and 12,
**characterized in that**
the device has means, following transmission of the control bit with a value different from the predefined value, for transmitting information as to the second communication protocol according to which the further data are transmitted.

## Revendications

1. Procédé, destiné à échanger des données entre des abonnés, qui sont connectés les uns aux autres à l'aide d'un réseau de bus,
des informations contenant des données étant échangées selon un premier protocole de communication,
les informations étant constituées d'une séquence de bits,
au moins un bit de commande qui dispose d'une position déterminée à l'intérieur de l'information qui est échangée selon le premier protocole de communication devant présenter une valeur prédéfinie,
pour chaque information, un abonné occupant le rôle de l'émetteur et au moins un autre abonné réceptionnant l'information à titre de destinataire et procédant à une supervision des erreurs pour l'information,
**caractérisé en ce que**
par l'émission du bit de commande avec une valeur divergeant de la valeur prédéfinie, au moins un premier destinataire étant amené dans un état d'exception du protocole, de sorte que celui-ci suspende la supervision des erreurs jusqu'à ce qu'une condition de reprise pour l'utilisation du premier protocole de communication soit satisfaite,
après l'envoi du bit de commande, l'émetteur commençant avec une valeur divergeant de la valeur prédéfinie à transmettre des données supplémentaires selon un deuxième protocole de communication à au moins un deuxième destinataire, pendant la transmission selon le deuxième protocole de communication, la condition de reprise pour l'utilisation du premier protocole de communication n'étant pas satisfaite, de sorte qu'il est assuré que l'au moins un premier destinataire attende dans l'état d'exception du protocole jusqu'à ce que l'information selon le deuxième protocole de communication ait été transmise ;
étant défini en tant que condition de reprise pour l'utilisation du premier protocole de communication un nombre prédéfini ou prédéfinissable de bits ayant des valeurs prédéfinies.

2. Procédé selon la revendication 1, **caractérisé en ce que** des valeurs de bits sont représentées sur le réseau de bus par des signaux physiques, pour la transmission selon le deuxième protocole de communication étant utilisés des signaux physiques, lesquels se différencient des signaux physiques pour la transmission selon le premier protocole de communication.

3. Procédé selon la revendication 1 ou 2, **caractérisé en ce que** pour la transmission selon le deuxième protocole de communication sont utilisés des signaux physiques lesquels sont interprétés par rapport au premier protocole de communication comme un signal physique déterminé de la transmission selon le premier protocole de communication, lequel empêche l'intervention de la condition de reprise.

4. Procédé selon l'une quelconque des revendications 1 à 3, **caractérisé en ce qu'**après l'envoi de l'au moins un bit de commandes, l'émetteur transmet avec une valeur divergeant de la valeur prédéfinie une information selon quel protocole de communication il va transmettre les données supplémentaires, avant de commencer à transmettre les données selon ledit protocole de communication.

5. Procédé selon l'une quelconque des revendications 1 à 4, **caractérisé en ce que** l'au moins un destinataire adopte l'état d'exception du protocole **en ce qu'**il procède à un redémarrage d'une unité de commande de protocole ou d'une machine d'état de protocole.

6. Procédé selon l'une quelconque des revendications 1 à 5, **caractérisé en ce qu'**il est défini en tant que condition de reprise pour l'utilisation du premier protocole de communication une durée prédéfinie ou prédéfinissable d'absence de communication sur le bus.

7. Procédé selon l'une quelconque des revendications 1 à 6, **caractérisé en ce que** les informations qui doivent être transmises selon le premier protocole comportent un en-tête, un champ de données et une partie finale, à l'aide d'une identification contenue dans l'en-tête de l'information étant fixé à quel abonné est octroyé un accès en émission sur le bus, lorsque plusieurs abonnés essayent simultanément d'envoyer une information ; l'au moins un bit de commande étant contenu dans l'en-tête.

8. Procédé selon l'une quelconque des revendications 1 à 7, **caractérisé en ce que** selon le deuxième protocole de communication, les données supplémentaires sont transmises après un signal de départ adapté sous la forme d'une séquence définie quelconque d'unités de données ou dans le format UART ou dans le format Flex-Ray ou dans un format Ethernet-MAC.

9. Procédé selon l'une quelconque des revendications 1 à 8, **caractérisé en ce que** les données supplémentaires sont transmises selon le deuxième protocole de communication parallèlement à plusieurs destinataires, en utilisant plusieurs bandes de fréquence dissociables les unes des autres.

10. Procédé selon l'une quelconque des revendications 1 à 9, **caractérisé en ce que** grâce au procédé, à des fins de redondance ou de cryptage, des données de plusieurs informations qui sont échangées selon le premier protocole de communication sont transmises en supplément en tant que données selon le deuxième protocole de communication.

11. Dispositif, destiné à échanger des données entre des abonnés, qui sont connectés entre eux à l'aide d'un réseau de bus,
qui comporte de moyens, de sorte que des informations qui contiennent des données soient échangées selon un premier protocole de communication,
les informations étant constituées d'une séquence de bits,
au moins un bit de commande disposant d'une position prédéfinie à l'intérieur de l'information qui est échangée selon le premier protocole de communication devant présenter une valeur prédéfinie,
**caractérisé en ce que**
le dispositif contient des moyens permettant, après la réception du bit de commande avec une valeur divergeant de la valeur prédéfinie par au moins un premier destinataire, d'amener cet au moins un destinataire dans un état d'exception du protocole, de sorte que celui-ci suspende la supervision des erreurs jusqu'à ce qu'une condition de reprise pour l'utilisation du premier protocole de communication soit satisfaite,
étant défini en tant que condition de reprise pour l'utilisation du premier protocole de communication un nombre prédéfini ou prédéfinissable de bits ayant des valeurs prédéfinies.

12. Dispositif selon la revendication 11, **caractérisé en ce que** le dispositif comporte des moyens pour réceptionner au titre de destinataire lors de la réception du bit de commande avec une valeur divergeant de la valeur prédéfinie les données supplémentaires selon le deuxième protocole de communication.

13. Dispositif selon l'une quelconque des revendications 11 à 12, **caractérisé en ce que** le dispositif comporte des moyens pour transmettre après l'envoi du bit de commande avec une valeur divergeant de la valeur prédéfinie une information selon quel deuxième protocole de communication les données supplémentaires sont transmises.
